# EUROPÄISCHE PATENTSCHRIFT

(11) **EP 0 563 917 B1**
(45) Veröffentlichungstag und Bekanntmachung des Hinweises auf die Patenterteilung: **10.06.1998**
(21) Anmeldenummer: 93105333.4
(22) Anmeldetag: 31.03.1993
(51) Int. Cl.: C08F 10/00, C08F 4/642

(54) **Katalysator für die Olefinpolymerisation, Verfahren zu seiner Herstellung und seine Verwendung**
Catalyst for the polymerisation of olefins, process for its preparation and its use
Catalysateur pour la polymérisation d'oléfines, procédé pour sa préparation et sa utilisation

(30) Priorität: 01.04.1992 DE 4210780
(43) Veröffentlichungstag der Anmeldung: 06.10.1993
(73) Patentinhaber: TARGOR GmbH, 55116 Mainz (DE)
(72) Erfinder: Herrmann, Hans-Friedrich, Dr., W-6100 Darmstadt (DE); Bachmann, Bernd, Dr., W-6239 Eppstein/Taunus (DE); Hierholzer, Bernhard, Dr., W-6000 Frankfurt am Main (DE); Spaleck, Walter, Dr., W-6237 Liederbach (DE)

(56) Entgegenhaltungen:
- EP-A- 0 285 443
- EP-A- 0 295 312
- EP-A- 0 518 092
- Handbook of Chemistry and Physics, 55th Edition, CRC, Cleveland, 1974, C-292
- Saechtling-Zebrowski, Kunststoff-Taschenbuch, 19. Auflage, Carl Hanser Verlag, München Wien, 1974, Tafel 41

## Beschreibung

Die vorliegende Erfindung betrifft einen geträgerten (heterogenen) Katalysator, der vorteilhaft bei der Olefinpolymerisation eingesetzt werden kann.

Bekannt sind Verfahren zur Herstellung von Polyolefinen mit Hilfe von homogenen Katalysatorsystemen, bestehend aus einer Übergangsmetallkomponente vom Typ eines Metallocens und einer Cokatalysator-Komponente, einer oligomeren Aluminiumverbindung vom Typ eines Aluminoxans (meist Methylaluminoxan), welche bei hoher Aktivität engverteilte Polymere bzw. Copolymere liefern (vgl. EP-A-69 951).

Ein prinzipieller Nachteil dieser löslichen (homogenen) Metallocen-/ Methylaluminoxan-Katalysatorsysteme in Verfahren, bei denen das gebildete Polymer als Feststoff anfällt, ist die Ausbildung von starken Belägen an Reaktorwänden und Rührer. Diese Beläge entstehen immer dann durch Agglomeration (Polymer Commun. (1991) 32, 58) der Polymerpartikel, wenn das Metallocen, oder Aluminoxan, oder beide gelöst im Suspensionsmedium vorliegen. Derartige Beläge in den Reaktorsystemen müssen regelmäßig entfernt werden, da diese rasch erhebliche Stärken erreichen, eine hohe Festigkeit besitzen und den Wärmeaustausch zum Kühlmedium verhindern.

Zur Vermeidung der Belagbildung im Reaktor sind geträgerte Katalysatorsysteme vorgeschlagen worden, bei denen das Metallocen und/oder die als Cokatalysator dienende Aluminiumverbindung auf einem anorganischen Trägermaterial fixiert werden (vgl. EP-A-206 794). Das dadurch in das Polymerprodukt eingebrachte anorganische Trägermaterial vermindert jedoch die Produktqualität.

EP-A 285 443 und EP-A 295 312 beschreiben ein Polymerisationssystem, bei welchem anorganische Oxide und organische Polymere als Träger für Metallocene verwendet werden. Dabei wird der Cokatalysator, Methylaluminoxan, durch Verwendung eines Lösungsmittels, in welchem dieser schlecht löslich ist, auf den Träger gefällt. Insbesondere bei der Verwendung von polymeren Trägern erfolgt unter Polymerisationsbedingungen ein Ablösen der Katalysatorenkomponenten vom Träger durch das Suspensionsmittel oder die flüssigen Monomeren.

JP 6 3092-621 beschreibt einen Gasphasenkatalysator zur Herstellung von Ethylen-Copolymeren, welcher durch Aufbringen einer Lösung von Metallocenen und Methylaluminoxan auf granulares Polyethylenpulver entsteht. Die leichte Ablösbarkeit vom Träger begrenzt auch hier das Einsatzgebiet auf die Gasphasenpolymerisation.

EP-A 518 092 beschreibt ein geträgertes Katalysatorsystem, das sich sowohl für die Suspensionspolymerisation, die Lösungspolymerisation als auch für die Gasphasenpolymerisation von C₂- bis C₁₀-Alk-1-enen eignet. Dieses Katalysatorsystem wird dadurch hergestellt, daß Metallocene zusammen mit einer oligomeren Aluminoxanverbindung vermischt und als Lösung auf ein fünfteiliges Polymerisat aus Polyvinylchlorid, Polystyrol oder aus Polyolefinen aufgebracht werden.

Es bestand daher die Aufgabe ein Katalysatorsystem bzw. ein Polymerisationsverfahren zu finden, das die aus dem Stand der Technik bekannten Nachteile vermeidet. Insbesondere sollte ein solches Katalysatorsystem kostengünstig herzustellen und ohne wesentliche Beeinträchtigung seiner Aktivität universell einsetzbar sein.

Überraschenderweise ergibt sich eine gute und einfache Trägerung, die universell in allen Polymerisationsverfahren einsetzbar ist, wenn das Reaktionsprodukt aus einer aluminoorganischen Verbindung A und einer Übergangsmetallverbindung B mit einer speziellen polymeren Trägerkomponente C zur Umsetzung gebracht wird.

Gegenstand der vorliegenden Erfindung ist somit ein geträgerter Polymerisationskatalysator, herstellbar durch Umsetzung des Reaktionsprodukts gebildet aus einem Aluminoxan und mindestens einem Metallocen mit einem mikroporösen, polymeren Träger, wobei das Porenvolumen des mikroporösen, polymeren Trägers mindestens 50 Vol.-% bezogen auf das Gesamtvolumen des Trägermaterials beträgt.

Erfindungsgemäß können auch Mischungen verschiedener Aluminoxane und/oder mehrere Metallocene eingesetzt werden. Durch den Einsatz mehrerer Metallocene sind insbesondere breit verteilte Polymere und sog. Reaktorblends zugänglich. Bevorzugt wird jedoch ein Metallocen verwendet.

Als Aluminoxan wird bevorzugt eine Verbindung der Formel (II) 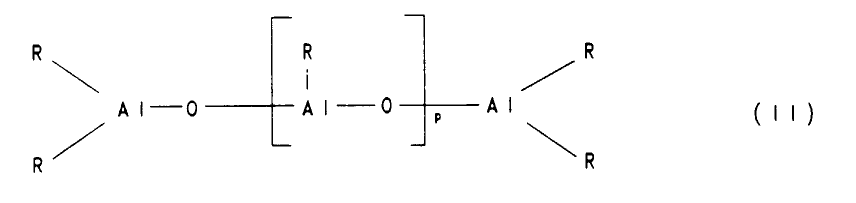 für den linearen Typ und/oder der Formel (III) 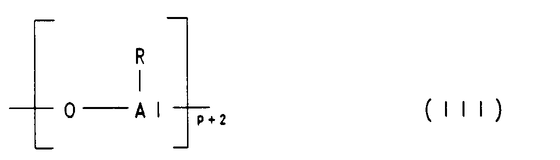 für den cyclischen Typ verwendet, wobei in den Formeln (II) und (III) die Reste R gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeutet.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird. Zur Herstellung eines Aluminoxans mit verschiedenen Alkylgruppen R werden entsprechend der gewünschten Zusammensetzung und Reaktivität zwei verschiedene Aluminiumtrialkyle (AIR₃ + AIR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Übergangsmetallverbindung dient beim erfindungsgemäßen Katalysator mindestens ein Metallocen. Einsetzbar ist grundsätzlich jedes Metallocen unabhängig von Struktur und Zusammensetzung. Die Metallocene können sowohl verbrückt als auch unverbrückt sein, gleiche oder verschiedene Liganden aufweisen. Es handelt sich um Verbindungen der Metalle der Gruppen IVb, Vb oder VIb des Periodensystems, z. B. Verbindungen von Titan, Zirkonium, Hafnium, Vanadium, Niob, Tantal, Chrom, Molybdän, Wolfram, bevorzugt von Zirkonium, Hafnium und Titan, insbesondere von Zirkonium.

Solche Metallocene sind bekannt und beispielsweise in folgenden Dokumenten beschrieben: EP-A-336 127, EP-A-336 128, EP-A-387 690, EP-A-387 691, EP-A-302 424, EP-A-129 368, EP-A-320 762, EP-A-284 707, EP-A-316 155, EP-A-351, 392, US-A-5 017 714, J. Organomet. Chem., 342 (1988) 21.

Von besonderem Interesse sind Metallocene, speziell Zirkonocene, die Indenylderivate als Liganden tragen. Es handelt sich dabei bevorzugt um die Verbindungen der nachstehenden Formel I 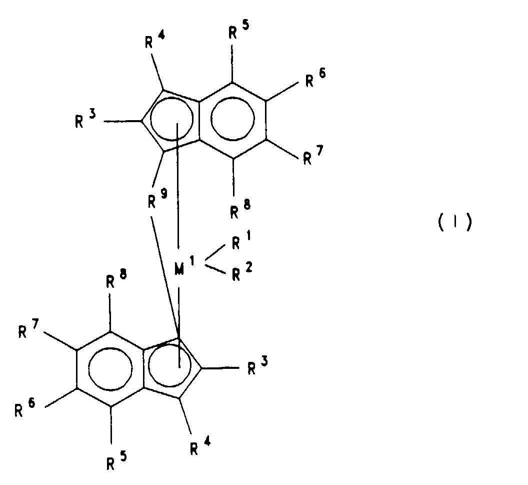 worin
- M¹: ein Metall der Gruppe IVb, Vb oder VIb des Periodensystems ist,
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe, eine OH-Gruppe oder ein Halogenatom bedeuten, die Reste R³ gleich oder verschieden sind und ein Wasserstoffatom, ein Halogenatom, eine C₁-C₁₀-Alkylgruppe, die halogeniert sein kann, eine C₆-C₁₀-Arylgruppe, einen -NR₂, -SR, -OSiR₃, -SiR₃ oder PR₂-Rest bedeuten, worin R ein Halogenatom, eine C₁-C₁₀-Alkylgruppe oder eine C₆-C₁₀-Arylgruppe ist,
- R⁴ bis R⁸: die für R³ genannten Bedeutungen besitzen oder benachbarte Reste R⁴ bis R⁸ mit den sie verbindenden Atomen einen aromatischen oder aliphatischen Ring bilden,
- R⁹: 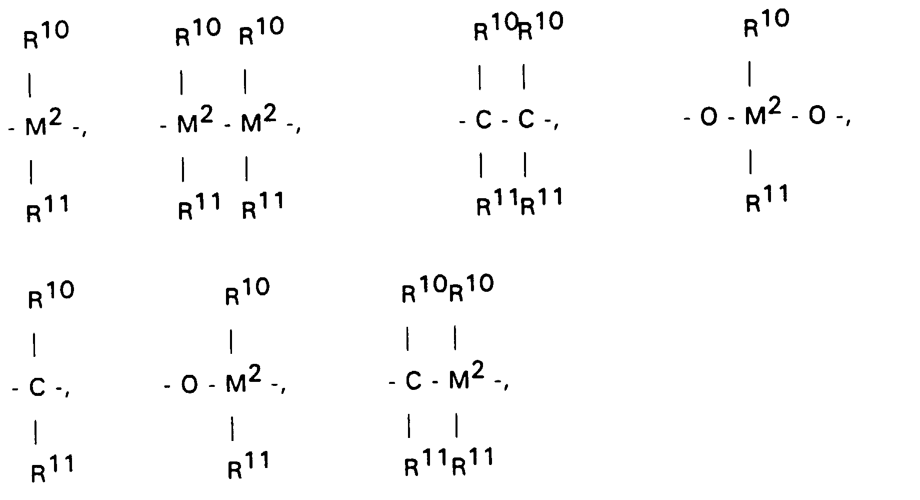 =BR¹⁰, =AIR¹⁰, -Ge-, -Sn-, -O-, -S-, =SO, =SO₂, =NR¹⁰, =CO, = PR¹⁰ oder =P(O)R¹⁰ ist,
wobei
- R¹⁰ und R¹¹: gleich oder verschieden sind und ein Wasserstoffatom, ein Halogenatom, eine C₁-C₁₀-Alkylgruppe, C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹⁰ und R¹¹ jeweils mit den sie verbindenden Atomen einen Ring bilden und
- M²: Silizium, Germanium oder Zinn ist.

Die den Verbindungen I entsprechenden 4,5,6,7-Tetrahydroindenylanaloga sind ebenfalls von Bedeutung.

In Formel I gilt bevorzugt, daß
- M¹: Zirkonium ist,
- R¹ und R²: gleich sind und für Methyl oder Chlor, insbesondere Chlor, stehen,
- R³ - R⁸: Wasserstoff oder C₁-C₄-Alkyl bedeuten,
- R⁹: 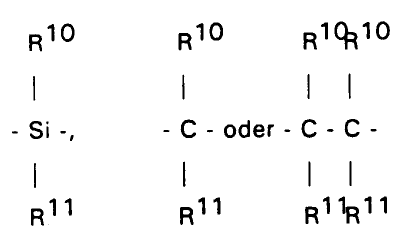 bedeutet, wobei
- R¹⁰ und R¹¹: gleich oder verschieden sind und C₁-C₄-Alkyl oder C₆-C₁₀-Aryl bedeuten. Insbesondere sind R¹⁰ und R¹¹ gleich oder verschieden und bedeuten Methyl oder Phenyl.

Die Indenyl- bzw. Tetrahydroindenylliganden in Formel I sind bevorzugt in 2-, 2,4-, 4,7-, 2,6-, 2,4,6-, 2,5,6-, 2,4,5,6- und 2,4,5,6,7-Stellung, insbesondere in 2,4,6-Stellung, substituiert. Die Substitution erfolgt bevorzugt durch eine C₁-C₄-Alkylgruppe wie z. B. Methyl, Ethyl oder Isopropyl. Die 2-Stellung ist bevorzugt durch Methyl substituiert.

Von besonderer Bedeutung sind weiterhin solche Verbindungen I, bei denen die Substituenten in 4- und 5-Stellung der Indenylreste (R⁵ und R⁶) zusammen mit den sie verbindenden Atomen einen Benzolring bilden. Dieses kondensierte Ringsystem kann ebenfalls durch Reste in der Bedeutung von R³ - R⁸ substituiert sein. Beispielhaft für solche Verbindungen I ist Dimethylsilandiylbis(2-methyl-4,5-benzoindenyl)zirkondichlorid zu nennen.

Die Metallocene I sind insbesondere zur Herstellung von hochmolekularen Polyolefinen mit hoher Stereoregularität geeignet.

Die Metallocene I sowie die in den aufgeführten Dokumenten beschriebenen Metallocene können beispielsweise nach folgendem Reaktionsschema hergestellt werden: 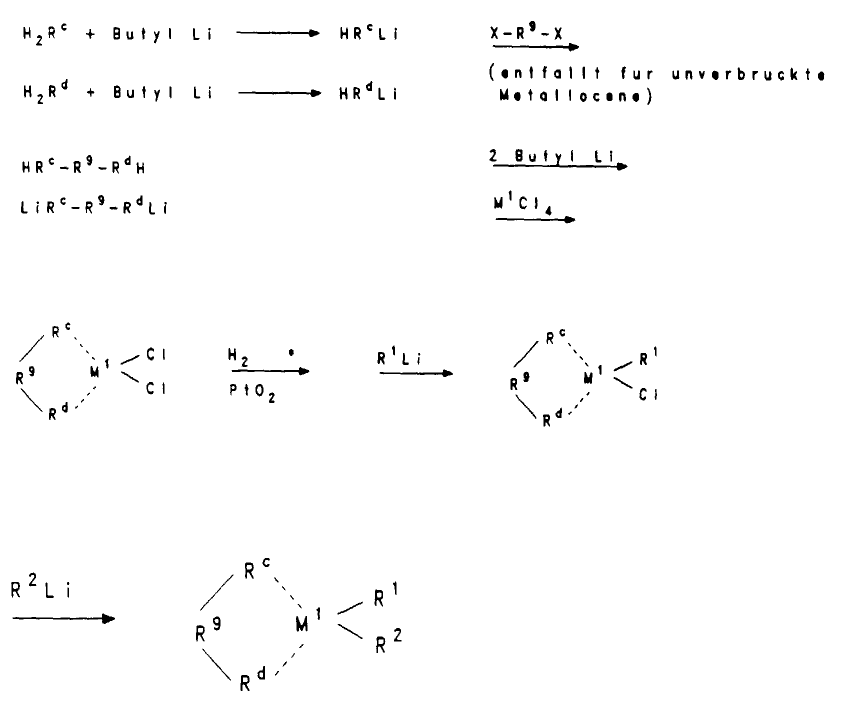 X = Cl, Br, I, O-Tosyl; H₂R^{c}, H₂R^{d} = Liganden, z. B. (subst.) Inden
∗: zusätzlicher Hydrierschritt, falls z. B. Indenylliganden in Tetrahydroindenylliganden überführt werden sollen.

Die Herstellungsverfahren sind grundsätzlich literaturbekannt; vgl. Journal of Organometallic Chem. 288 (1985) 63 - 67, EP-A-320 762 und die zitierten Dokumente bzgl. der dort beschriebenen Metallocene.

Für die Herstellung der Verbindungen I dienen verschieden substituierte Indene als Ausgangsstoffe (H₂R^{c}, H₂R^{d}; vgl. das angeführte Reaktionsschema). Solche Indenderivate sind z. T. bekannt und im Handel erhältlich. Speziell substituierte Indene können nach den im folgenden angegebenen Verfahren hergestellt werden:
a) H₂R^{c}, H₂R^{d} = 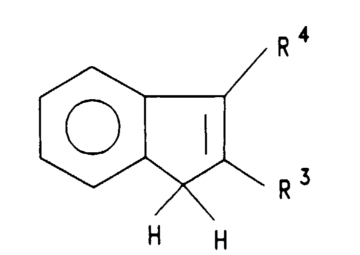
   Die Synthese erfolgt gemäß oder analog den nachstehenden Literaturstellen:
   J. Org. Chem., 49 (1984) 4226 - 4237, J. Chem. Soc., Perkin II, 1981, 403 - 408, J. Am. Chem. Soc., 106 (1984) 6702, J. Am. Chem. Soc., 65 (1943) 567, J. Med. Chem., 30 (1987)1303 - 1308, Chem. Ber. 85 (1952) 78 - 85.
b) H₂R^{c}, H₂R^{d} = 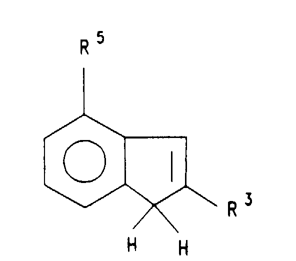
   Die Herstellung der als Ausgangssubstanzen dienenden 2,4-substituierten Indene H₂R^{c} bzw. H₂R^{d} ist auf 2 verschiedenen Wegen möglich:
   b1) Als Ausgangsverbindung dient ein Ketoaldehyd der im nachstehenden Reaktionsschema angegebenen Formel, dessen Herstellung bekannt ist (Synthesis 1985, 1058).
      Die Umsetzung dieses Ketoaldehyds mit Cyclopentadien wird in einem inerten Lösemittel in Gegenwart einer Base durchgeführt. Bevorzugt werden Alkohole wie Methanol, Ethanol oder t-Butanol, insbesondere Methanol, verwendet.
      Als Basen lassen sich eine Vielzahl von Verbindungen verwenden. Als Beispiele seien Alkali- und Erdalkalihydroxide, Alkali- und Erdalkalialkoholate, wie Natriummethanolat, Natriumethanolat, Kaliumtertiärbutanolat, Amide wie Lithiumdiisopropylamid oder Amine genannt. Bevorzugt werden Natriumethanolat, Kaliumtertiärbutanolat und Kaliumhydroxid verwendet.
      Die Molverhältnisse der Ausgangsverbindungen einschließlich der verwendeten Base können innerhalb weiter Grenzen schwanken. Bevorzugt ist das Molverhältnis Ketoaldehyd : Cyclopentadien : Base = 1 : 1 - 1,5 : 2 - 3; insbesondere 1 : 1,1 : 2,5.
      Die Reaktionstemperatur beträgt bevorzugt -40 °C bis 100 °C, insbesondere 0 °C - 25 °C.
      Die Reaktionszeiten schwanken in der Regel zwischen 10 min und 100 h, vorzugsweise zwischen 1 h und 30 h.
      Der Substituent in 2-Stellung kann nach Umwandeln des in 4-Position monosubstituierten Indens in das in 4-Position monosubstituierte 2-Indanon nach einer allgemeinen Arbeitsvorschrift (Organic Synthesis, Coll. Vol. V, 1973, 647) durch eine Grignard-Reaktion eingeführt werden. Die anschließende Wasserabspaltung führt zu den 2,4-substituierten Indenen.
      Die 2,4-substituierten Indene fallen als Doppelbindungsisomere an, die direkt für die Synthese der entsprechenden Metallocenkomplexe eingesetzt werden können. 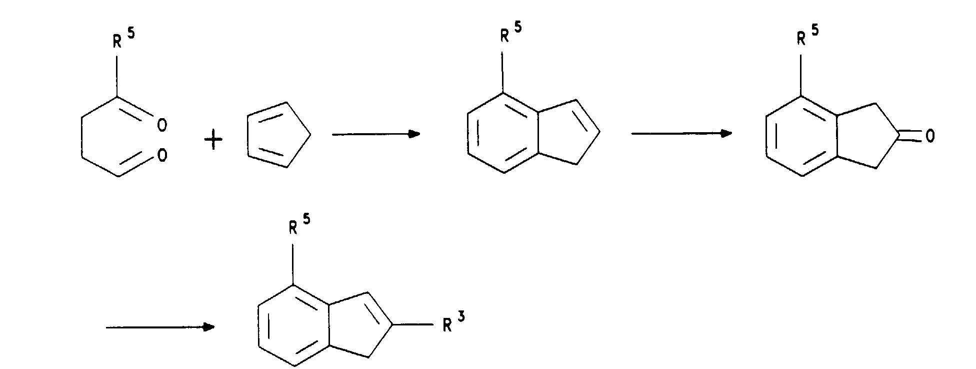
   b2) Eine andere mögliche und vorteilhafte Strategie verfährt nach folgendem Schema:
      Ein in 2-Position substituiertes Benzylhalogenid wird analog eines literaturbekannten Verfahrens (J. Org. Chem. 1958, 23, 1437) durch Umsetzen mit einem entsprechend substituierten Malonsäurediester in den disubstituierten Malonsäurediester umgewandelt.
      Verseifung des Diesters und Decarboxylierung nach den üblichen Verfahren führt zu einem disubstituierten Propionsäurederivat.
      Der Ringschluß zum 2,4-disubstituierten 1-Indanon wird nach Überführen der Carbonsäure in das Carbonsäurechlorid nach gängigen Verfahren durchgeführt (Friedel-Crafts-Reaktion).
      Reduktion des Ketons nach bekannten Methoden und anschließende Wasserabspaltung liefert die 2,4-disubstituierten Indene.
c) H₂R^{c}, H₂R^{d} = 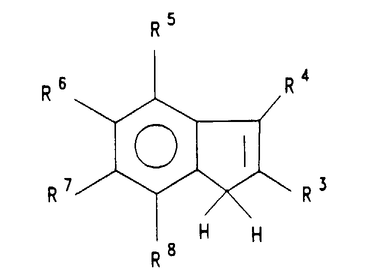
   Die Herstellung der Verbindungen H₂R^{c}, H₂R^{d} erfolgt durch Umsetzung einer Verbindung II 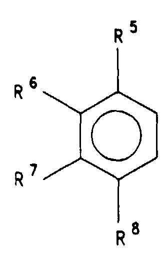 mit einer Verbindung III 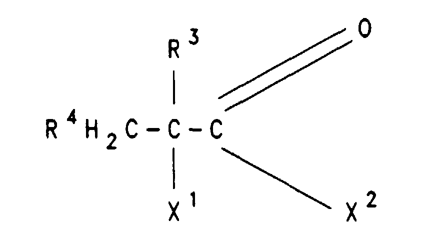 oder deren Anhydrid in Gegenwart eines Friedel-Crafts-Katalysators. Dabei stehen X¹ und X² für eine nucleophile Abgangsgruppe wie z. B. Halogen, Hydroxygruppe oder eine Tosylgruppe; insbesondere für Brom oder Chlor.
   Man erhält die Indanone IV bzw. IVa 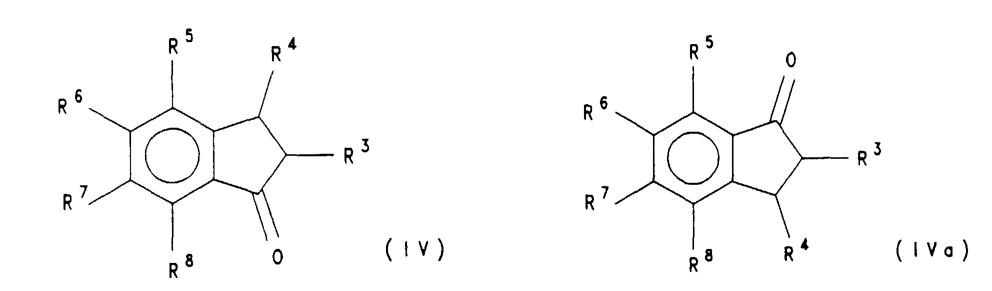
   Die Indanone können in Abhängigkeit des Substitutionsmusters am Aromaten in Form zweier Konstitutionsisomere der Formel IV bzw. IVa anfallen. Diese können in reiner Form oder als Gemisch nach literaturbekannten Methoden mit Reduktionsmitteln wie NaBH₄ oder LiAlH₄ zu den entsprechenden Indanolen reduziert und anschließend mit Säuren wie Schwefelsäure, Oxalsäure, p-Toluolsulfonsäure oder auch durch Behandlung mit wasserentziehenden Substanzen wie Magnesiumsulfat, Natriumsulfat, Aluminiumoxid, Kieselgel oder Molekularsiebe zu Indenen der Formel V bzw. Va (H₂R^{c}/H₂R^{d}) dehydratisiert werden (Bull. Soc. Chim. Fr. 11 (1973) 3092; Organomet. 9 (1990) 3098). 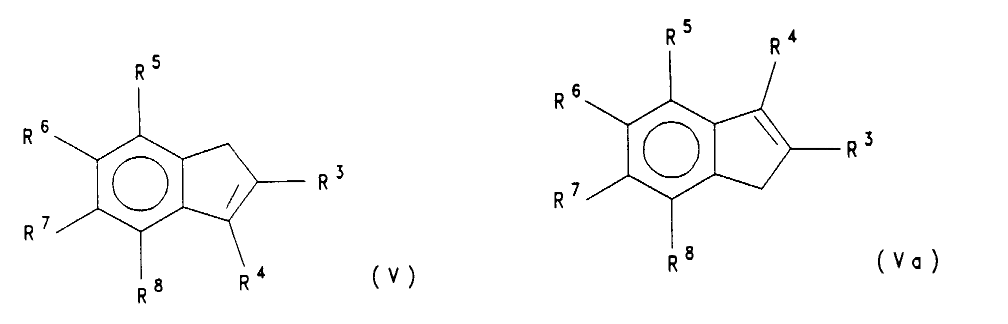
   Geeignete Friedel-Crafts-Katalysatoren sind z. B. AlCl₃, AlBr₃, FeCl₃, SbCl₅, SnCl₄, BF₃, TiCl₄, ZnCl₂, H₂SO₄, Polyphosphorsäure, H₃PO₄ oder eine AlCl₃/NaCl-Schmelze; insbesondere AlCl₃.
   Die Ausgangsverbindungen der Formeln II und III sind bekannt und im Handel erhältlich, oder sie lassen sich nach literaturbekannten Verfahren herstellen.
   Die Umsetzung wird in einem inerten Lösemittel durchgeführt. Bevorzugt wird Methylenchlorid oder CS₂ eingesetzt. Sind die Ausgangskomponenten flüssig, kann auch auf ein Lösemittel verzichtet werden.
   Die Molverhältnisse der Ausgangsverbindungen einschließlich des Friedel-Crafts-Katalysators können innerhalb weiter Grenzen schwanken. Bevorzugt ist das Molverhältnis von Verbindung II : III : Katalysator = 1 : 0,5 - 1,5 : 1 - 5; insbesondere 1 : 1 : 2,5 - 3.
   Die Reaktionstemperatur beträgt bevorzugt 0 °C bis 130 °C, insbesondere 25 °C bis 80 °C.
   Die Reaktionszeiten schwanken in der Regel zwischen 30 min und 100 h, vorzugsweise zwischen 2 h und 30 h.
   Bevorzugt wird eine Mischung der Verbindungen II und III vorgelegt und der Friedel-Crafts-Katalysator zudosiert. Auch die umgekehrte Zugabefolge ist möglich.
   Die Indanone der Formel IV bzw. IVa können durch Destillation, Säulenchromatographie oder Kristallisation gereinigt werden.
   Die substituierten Indene können als Doppelbindungsisomere anfallen (V/Va). Diese können von Nebenprodukten durch Destillation, Säulenchromatographie oder Kristallisation gereinigt werden.
   Ausgehend von den Indenen der Formeln V und Va, die als Isomerengemisch eingesetzt werden können, verläuft die Herstellung der Metallocene I nach literaturbekannten Verfahren (vgl. AU-A-31 478/89, J. Organomet. Chem. 342 (1988) 21, EP-A-284 707) entsprechend dem angegebenen Reaktionsschema.
d) H₂R^{c}, H₂R^{d} = 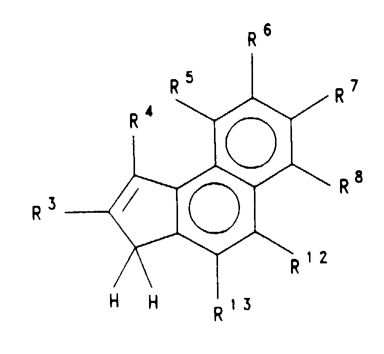 mit R¹² und R¹³ in den Bedeutungen von R⁴ - R⁸

Die Herstellung dieser benzokondensierten Indene und deren weitere Umsetzung zu den Metallocenen I erfolgt gemäß dem nachfolgenden Reaktionsschema:

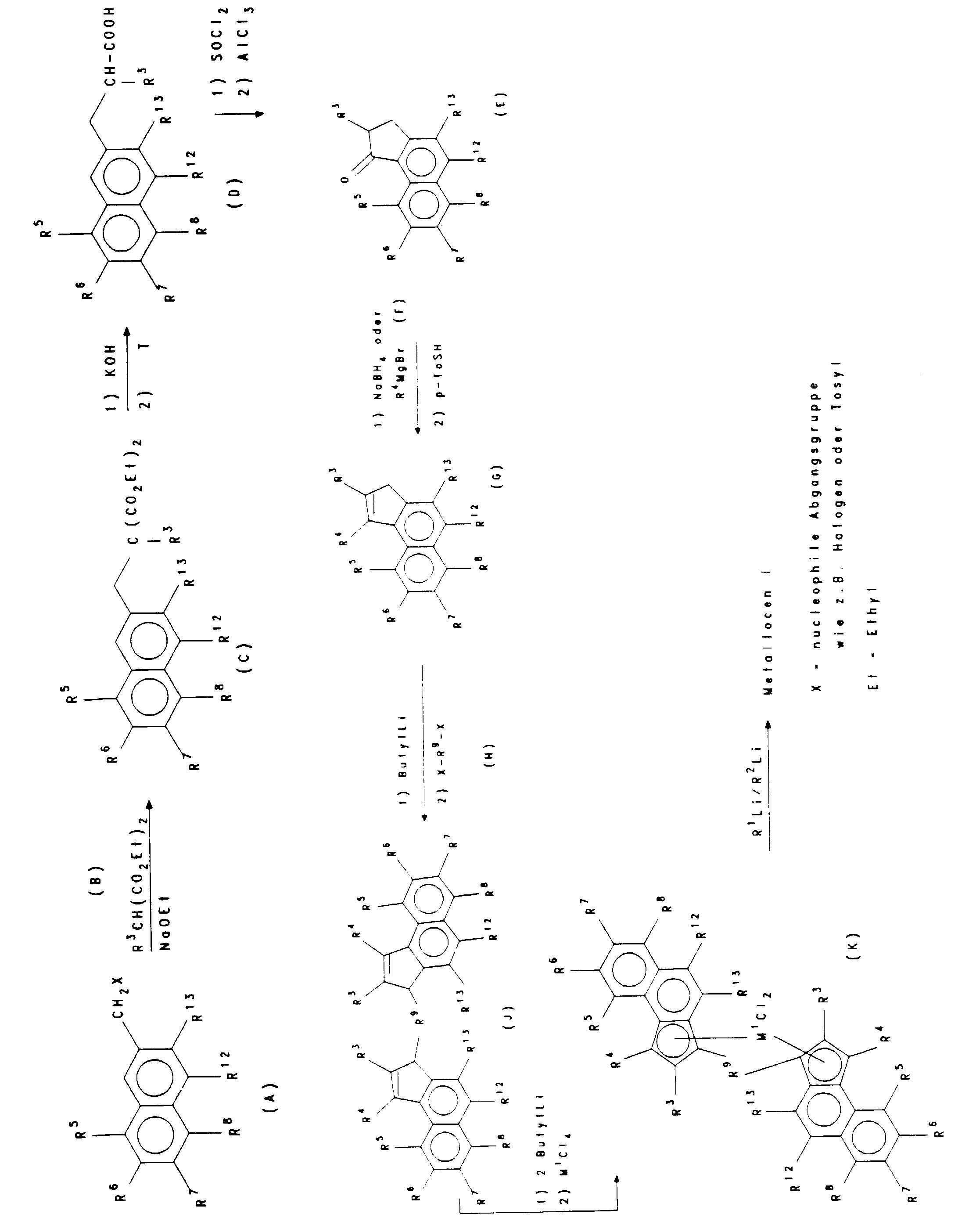

Die Naphthalinderivate der Formel A sind im Handel erhältlich oder können nach literaturbekannten Methoden hergestellt werden ("Friedel Crafts and Related Reactions", Wiley, New York, 1964, Vol. II, S. 659 - 766, Bull. Soc. Chim. Belges, 58 (1949) 87, J. Amer. Chem. Soc. 89 (1967) 2411).

Die Umsetzung zu den Verbindungen der Formel C erfolgt nach literaturbekannten Methoden durch Reaktion mit substituierten Malonsäureestern der Formel B unter basischen Bedingungen wie z. B. in ethanolischen Lösungen von Natriumethanolat (J. Org. Chem. 23 (1958) 1441, J. Am. Chem. Soc. 70 (1948) 3569).

Die Verbindungen der Formel C werden mit Alkalihydroxiden wie Kaliumhydroxid oder Natriumhydroxid nach literaturbekannten Methoden verseift und durch Thermolysieren der entstandenen Dicarbonsäure nach literaturbekannten Methoden zu den Verbindungen der Formel D decarboxyliert (J. Org. Chem. 23 (1958) 1441, J. Am. Chem. Soc. 70 (1948) 3569).

Der Ringschluß zu den substituierten Benzoindanonen der Formel E erfolgt nach literaturbekannten Methoden durch Umsetzung mit Chlorierungsreagentien wie z. B. SOCl₂ zu den entsprechenden Säurechloriden und anschließender Cyclisierung mit einem Frieder-Crafts-Katalysator in einem inerten Solvent, wie z. B. mit AlCl₃ oder Polyphosphorsäure in Methylenchlorid oder CS₂ (Organometallics 9 (1990) 3098, Bull. Soc. Chim. Fr. 3 (1967) 988, J. Org. Chem. 49 (1984) 4226).

Die Umsetzung zu den Benzoindenderivaten der Formel G erfolgt nach literaturbekannten Methoden durch Reduktion mit Natriumborhydrid oder Lithiumaluminiumhydrid in einem inerten Solvent wie z. B. Diethylether oder THF oder durch Alkylierung mit Alkylierungsmitteln der Formel F oder mit Lithiumalkylen zu den entsprechenden Alkoholen und Dehydratisierung der Alkohole unter sauren Bedingungen, wie z. B. mit p-Toluolsulfonsäure oder Oxalsäure oder durch Umsetzung mit wasserentziehenden Substanzen wie Magnesiumsulfat oder Molekularsiebe (Organometallics 9 (1990) 3098, Acta. Chem. Scand. B 30 (1976) 527, J. Amer. Chem. Soc. 65 (1943) 567).

Die Benzoindenderivate der Formel G können auch nach einer anderen, hier nicht näher aufgezeigten Syntheseroute ausgehend von substituierten Naphthalinen in 4 Syntheseschritten aufgebaut werden (Bull. Soc. Chim. Fr. 3 (1967) 988).

Die Herstellung der Ligandsysteme der Formel J und die Umsetzung zu den verbrückten chiralen Metallocenen der Formel K sowie die Isolierung der gewünschten racemischen Form ist im Prinzip bekannt (AU-A-31 478/89, J. Organomet. Chem. 342 (1988) 21, EP 0 284 707, EP 0 320 762). Hierzu wird das Benzoindenderivat der Formel G mit starken Basen wie z. B. Butyllithium in einem inerten Lösemittel deprotoniert und mit einem Reagenz der Formel H zu dem Ligandsystem der Formel J umgesetzt. Dieses wird anschließend mit zwei Äquivalenten einer starken Base wie z. B. Butyllithium in einem inerten Lösemittel deprotoniert und mit dem entsprechenden Metalltetrahalogenid wie z. B. Zirkontetrachlorid in einem geeigneten Lösemittel umgesetzt. Geeignete Lösemittel sind aliphatische und aromatische Lösemittel, wie z. B. Hexan oder Toluol, etherische Lösemittel, wie z. B. Tetrahydrofuran oder Diethylether oder halogenierte Kohlenwasserstoffe, wie z. B. Methylenchlorid. Die Trennung der racemischen und der meso-Form erfolgt durch Extraktion oder Umkristallisation mit geeigneten Lösemitteln.

Die Derivatisierung zu den Metallocenen der Formel I kann nach literaturbekannten Methoden, z. B. durch Umsetzung mit Alkylierungsmitteln wie z. B. Methyllithium erfolgen (Organometallics 9 (1990) 1539, J. Amer. Chem. Soc. 95 (1973) 6263, EP 0 277 004).

Beispielhaft für erfindungsgemäß verwendbare Metallocene seien die folgenden Verbindungen genannt:
Biscyclopentadienylzirkoniumdichlorid,
Biscyclopentadienylzirkoniumdimethyl,
Biscyclopentadienylzirkoniumdiphenyl,
Biscyclopentadienylzirkoniumdibenzyl,
Biscyclopentadienylzirkoniumbistrimethylsilyl,
Bis(methylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1,2,4-trimethylcyclopentadienyl)zirkoniumdichlorid,
Bis(1,2,3,-trimethylcyclopentadienyl)zirkoniumdichlorid,
Bis(pentamethylcyclopentadienyl)zirkoniumdichlorid,
Bisindenylzirkoniumdichlorid, Bis(tetrahydroindenyl)zirkoniumdichlorid,
Dimethylsilyl-bis-1-tetrahydroindenylzirkoniumdichlorid,
Dimethylsilyl-bis-1-(2-methyl-tetrahydroindenyl)-zirkoniumdichlorid,
Dimethylsilyl-bis-1-(2,3,5-trimethyl-cyclopentadienyl)-zirkoniumdichlorid,
Dimethylsilyl-bis-1-(2,4-dimethyl-cyclopentadienyl)-zirkoniumdichlorid,
Dimethylsilyl-bis-1-indenylzirkoniumdichlorid,
Dimethylsilyl-bis-1-indenylzirkoniumdimethyl,
Dimethylgermyl-bis-1-indenylzirkoniumdichlorid,
Dimethylsilyl-bis-1-(2-methyl-indenyl)-zirkoniumdichlorid,
Dimethylsilyl-bis-1-(2-methyl-4-isopropylindenyl)zirkoniumdichlorid
Phenylmethylsilyl-bis-1-(2-methyl-indenyl)-zirkoniumdichlorid,
Dimethylsilyl-bis-1-(2-methyl-4-ethylindenyl)-zirkoniumdichlorid,
Ethylen-bis-1-(4,7-dimethyl-indenyl)zirkoniumdichlorid,
Phenyl(methyl)silyl-bis-1-indenylzirkoniumdichlorid,
Phenyl(vinyl)silyl-bis-1-indenylzirkoniumdichlorid,
Diphenylsilyl-bis-1-indenylzirkoniumdichlorid,
Dimethylsilylbis(1-(2-methyl-4-tertiärbutylindenyl))-zirkondichlorid,
Methylphenylsilylbis(1-(2-methyl-4-isopropylindenyl))zirkondichlorid,
Dimethylsilylbis(1-(2-ethyl-4-methylindenyl))-zirkondichlorid,
Dimethylsilylbis(1-(2,4-dimethylindenyl))-zirkondichlorid,
Dimethylsilylbis(1-(2-methyl-4-ethylindenyl))-zirkondimethyl,
Dimethylsilylbis(2-methyl-4,6-diisopropylindenyl)-zirkondichlorid,
Dimethylsilylbis(2,4,6-trimethylindenyl))-zirkondichlorid,
Methylphenylsilylbis(2-methyl-4,6-diisopropylindenyl)zirkondichlorid,
1,2-Ethandiylbis(2-methyl-4,6-diisopropylindenyl)zirkondichlorid,
Dimethylsilylbis(2-methyl-4,5-benzoindenyl)zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Diphenylmethylen-(9-fluorenyl)-cyclopentadienyl-zirkondichlorid,
Isopropyliden-(9-fluorenyl)-cyclopentadienyl-zirkondichlorid,
Phenylmethylmethylen-(9-fluorenyl)-cyclopentadienyl-zirkondichlorid,
Isopropyliden-(9-fluorenyl)-(1-(3-isopropyl)cyclopentadienyl)-zirkondichlorid,
Isopropyliden-(9-fluorenyl)-(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid und
Isopropyliden-(9-fluorenyl)(1-(3-tert.-butyl)cyclopentadienyl)-zirkondichlorid.

Chirale Metallocene werden bei der Herstellung des erfindungsgemäßen Katalysators bevorzugt als Racemat eingesetzt. Verwendet werden kann aber auch die reine R- oder S-Form. Mit diesen reinen stereoisomeren Formen ist optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochtaktisches Polymeres erzeugen kann. Wird die meso-Form nicht abgetrennt, entsteht neben isotaktischen bzw. syndiotaktischen Polymeren auch ataktisches Polymer. Für bestimmte Anwendungen - weiche Formkörper beispielsweise - oder für die Herstellung von Polyethylentypen kann dies durchaus wünschenswert sein. Die Trennung der Stereoisomeren erfolgt nach literaturbekannten Verfahren.

Der erfindungsgemäß zu verwendende mikroporöse, polymere Träger kann je nach Einsatzgebiet variieren und beispielsweise dem gewünschten Polymerisationsprodukt entsprechen. Es handelt sich dabei bevorzugt um Thermoplaste wie z. B. Polyethylen (PE), Polypropylen (PP), Polystyrol (PS), Polyvinylchlorid (PVC), Acrylnitril-Butadien-Styrol-Copolymer (ABS), Polyamid (PA; z. B. PA-6, PA-12) Polymethylmethacrylat (PMMA) oder Polycarbonat (PC), um Copolymere, vernetzte Polymere oder Polymerblends.

Das charakteristische Merkmal der erfindungsgemäßen polymeren Träger C ist nicht ihre chemische Zusammensetzung, sondern ihre mikroporöse Struktur. Diese mikroporöse Struktur bewirkt einen Anteil an Hohlräumen (Porenvolumen) von mindestens 50 Vol.-%, bevorzugt mindestens 70 Vol.-%, bezogen auf das Gesamtvolumen des Trägerpartikels bzw. des Trägermaterials oder des Träger-Formkörpers (siehe unten). Gesamtvolumen des Trägers bedeutet dessen äußeres Volumen ohne Berücksichtigung des Porenvolumens.

Die Form der Mikroporen ist unregelmäßig, häufig sphärisch ausgebildet. Die Mikroporen sind durch kleine Porenöffnungen miteinander z. T. verbunden. Der Porendurchmesser beträgt ca. 0,1 bis 10 µm. Der Durchmesser der Porenöffnungen liegt bevorzugt im Bereich von 1/5 - 1/50, besonders bevorzugt nicht größer als 1/10, des Zelldurchmessers.

Die Partikelform des mikroporösen Trägers ist abhängig von der Nachbehandlung und kann irregulär oder sphärisch sein. Die Träger-Teilchengrößen können z. B. durch kryogene Mahlung und Siebung beliebig eingestellt werden. Es ist jedoch auch möglich, das mikroporöse Polymer direkt als Granulat, Platte oder Membran für die Herstellung des erfindungsgemäßen Katalysatorsystems zu verwenden und in dieser Form in einem geeigneten Polymerisationsverfahren einzusetzen.

Die Herstellung des mikroporösen Trägers kann auf verschiedenartige Weise erfolgen.

So kann ein Polymer (z.B. Polypropylen) mit einer zweiten Substanz (z.B. 50 Gew.-% N,N-bis-(2-hydroxyethyl)-hexadecylamin) vermischt werden, welche beim Erhitzen oberhalb der Schmelztemperatur des Polymeren eine einphasige Mischung bilden und welche beim Abkühlen zu einer festen Matrix erstarren.

Nachfolgend kann dann die zweite Komponente mit einem Lösungsmittel entfernt werden und es verbleibt eine polymer Struktur mit sphärischen Mikroporen als Hohlräumen, welche untereinander durch enge Porenöffnungen verbunden sind.

Für die Herstellung derartiger mikroporöser Trägermaterialien werden jeweils der Art des Polymers angepasste Substanzen, auch Zellformer genannt, wie z. B. Mischungen von Soja- und Rizinusöl dem Polymer in Extrudern oder anderen geeigneten Geräten zugemischt und später z. B. durch Propanol ausgewaschen. Solche Verfahren zur Herstellung von Pulvern, Fasern oder Membranen mikroporöser Polymere sind bekannt (vgl. z. B. DE-2 737 745, EP-B 108 601, DE-2 833 568, EP-A 357 021, DE 3 327 638).

Neben diesen Herstellungsmöglichkeiten gibt es weitere wie z. B. das Sintern feiner Polymer-Pulver oder spezielle Verfahren wie in EP-A 289 238 beschrieben. Die Herstellung des mikroporösen polymeren Trägers ist jedoch nicht auf die hier beschriebenen Verfahren beschränkt.

Beispiele für geeignete mikroporöse, polymere Träger sind im Handel erhältlich (z. B. die ^{R}Accurel-Typen der Fa. AKZO wie ^{R}Accurel-PE, ^{R}Accurel-PP, ^{R}Accurel-PA-6 oder ^{R}Accurel-PA-12 mit einem Hohlraumanteil von ca. 75 Vol.- %). Die Porengröße der ^{R}Accurel-Materialien beträgt 0,5 - 5 µm (PP), 1,0 - 5 µm (HDPE), 0,5 - 3 µm (PA-6 und PA-12).

Gegenstand der vorliegenden Erfindung ist ferner ein Verfahren zur Herstellung des erfindungsgemäßen geträgerten Polymerisationskatalysators, dadurch gekennzeichnet, daß man das Reaktionsprodukt gebildet aus einem Aluminoxan und mindestens einem Metallocen mit einem mikroporösen, polymeren Träger umsetzt.

Vorteilhafter Weise wird der mikroporöse, polymere Träger zuvor getrocknet, z.B. durch Behandeln mit Aluminiumalkyl-Lösungen, anschließend gewaschen und unter Schutzgas inertisiert.

Die Herstellung des Reaktionsproduktes geschieht bevorzugt in der Weise, daß man zunächst das Aluminoxan in einem geeigneten Lösungsmittel, z. B. Pentan, Hexan, Heptan, Toluol oder Dichlormethan, mit mindestens einem Metallocen durch intensive Mischung, z. B. durch Verrühren, zur Reaktion bringt. Die Reaktionstemperatur beträgt bevorzugt -20 bis + 120 °C, insbesondere 15 - 40 °C. Das molare Verhältnis Aluminium zu Übergangsmetall M des Metallocens liegt bevorzugt zwischen 10:1 und 10.000:1, insbesondere zwischen 100:1 und 2000:1. Die Reaktionszeit beträgt allgemein zwischen 5 und 120 Minuten, bevorzugt 10 -30 Minuten. Man arbeitet vorzugsweise bei einer Aluminium-Konzentration von größer 0,01 mol/Liter, insbesondere größer 0,5 mol/Liter. Die Reaktion wird unter Inertbedingungen durchgeführt.

Anstelle des Aluminoxans kann auch ein Gemisch eines Aluminoxans mit einer weiteren Aluminiumalkylverbindung wie z. B. Trimethyl-, Triethyl- oder Triisobutylaluminum für die beschriebene Reaktion mit dem Metallocen verwendet werden.

Nach erfolgter Reaktion kann z. B. im Vakuum das Lösungsmittel teilweise entfernt oder nach Aufkonzentrieren durch ein anderes Lösungsmittel ersetzt werden. Die so hergestellte Lösung wird in geeigneter Weise mit dem mikroporösen, polymeren Träger umgesetzt. Dabei wird der Träger mindestens in einer Menge zugesetzt, deren Poren-Gesamtvolumen die Lösung aus der Vorreaktion aufnehmen kann. Diese Umsetzung erfolgt bevorzugt bei Temperaturen zwischen
-20 und + 120 °C, insbesondere 15-40 °C, durch intensive Mischung z. B. durch Verrühren oder Behandlung mit Ultraschall. Es sollte eine gute Homogenisierung erfolgen. Dabei kann der Austausch des Inertgases des Porenvolumens z. B. durch kurzzeitiges Evakuieren beschleunigt werden.

Prinzipiell kann die Herstellung des geträgerten Katalysators auch in einer Eintopfreaktion erfolgen, d.h. alle 3 Ausgangskomponenten werden gleichzeitig in einem geeigneten Lösungs-/Suspensionsmittel miteinander umgesetzt. Dabei sollte die Menge des polymeren Trägers vorzugsweise so bemessen sein, daß er das gesamte Flüssigkeitsvolumen aufnehmen kann.

Der erfindungsgemäße Katalysator kann in einem inerten Suspensionsmittel wie z. B. Heptan, n-Decan, Hexan oder Dieselöl suspendiert oder auch trocken, evtl. nach dem Entfernen des restlichen Lösungsmittels durch einen Trocknungsschritt z. B. im Vakuum, in das Polymerisationssystem eindosiert werden.

Der erfindungsgemäße Katalysator kann vorteilhaft in der Gasphase, im flüssigen Monomer oder in Suspension vorpolymerisiert werden, wobei auf einen Zusatz einer weiteren aluminiumorganischen Verbindung verzichtet werden kann.

Gegenstand der vorliegenden Erfindung ist weiterhin ein Verfahren zur Herstellung eines Olefinpolymers durch Polymerisation oder Copolymerisation eines Olefins der Formel R^{a}-CH = CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, dadurch gekennzeichnet, daß als Katalysator das erfindungsgemäße Reaktionsprodukt verwendet wird.

Die Polymerisation oder Copolymerisation wird in bekannter Weise in Lösung, in Suspension oder in der Gasphase, kontinuierlich oder diskontinuierlich, ein- oder mehrstufig bei einer Temperatur von -60 bis 200 °C, vorzugsweise 30 bis 80 °C, besonders bevorzugt 50 bis 80 °C, durchgeführt. Polymerisiert oder copolymerisiert werden Olefine der Formel R^{a}-CH = CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für Olefine der Formel R^{a}-CH = CH-R^{b} sind Ethylen, Propylen, 1-Buten, 1-Hexen, 4-Methyl-1-penten, 1-Octen, Norbornen, Norbornadien, 1,4,5,8-Dimethano-1,2,3,4,4a,5,8,8a-octahydronaphthalin (DMON). Insbesondere werden Propylen oder Ethylen polymerisiert oder copolymerisiert.

Als Molmassenregler und/oder zur Aktivitätserhöhung wird, falls erforderlich, Wasserstoff zugegeben. Der Gesamtdruck im Polymerisationssystem beträgt 0,5 bis 100 bar. Bevorzugt ist die Polymerisation in dem technisch besonders interessanten Druckbereich von 5 bis 64 bar.

Der erfindungsgemäße Katalysator wird bevorzugt in einer Konzentration, bezogen auf das Übergangsmetall, von 10⁻³ bis 10⁻⁸ vorzugsweise 10⁻⁴ bis 10⁻⁷ mol Übergangsmetall pro dm³ Lösemittel bzw. pro dm³ Reaktorvolumen angewendet.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Vor der Zugabe des Katalysators in den Reaktor kann zusätzlich eine andere Aluminiumalkylverbindung wie z. B. Trimethylaluminium, Triethylaluminium, Triisobutylaluminium oder Isoprenylaluminium zur Inertisierung des Polymerisationssystems (z. B. zur Abtrennung von im Olefin vorhandener Katalysatorgifte) in einer Konzentration von 1 bis 0,001 mmol Al pro kg Reaktorinhalt dem Polymerisationssystem zugesetzt werden.

Der Einsatz weiterer Substanzen zur Katalyse der Polymerisationsreaktion ist jedoch grundsätzlich nicht erforderlich, d. h. der erfindungsgemäße Kontakt kann - dies ist bevorzugt - als alleiniger Katalysator für die Olefinpolymerisation verwendet werden.

Die Molmasse des gebildeten Polymers kann auch durch Veränderung der Polymerisationstemperatur beeinflußt werden, wobei durch periodische Änderungen oder einen mehrstufigen Prozeß oder den Einsatz mehrerer Metallocene auch breit verteilte Polymere zugänglich sind.

Darüber hinaus wird die mit dem erfindungsgemäßen festen Katalysator erzielte Polymermolmasse durch die Art des verwendeten Metallocens, durch die Aluminiumverbindung sowie durch das Al/M¹-Verhältnis bestimmt.

Der beschriebene Katalysator benötigt zur Aktivierung keinen zusätzlichen Cokatalysator und vermeidet vollständig die Ausbildung von Reaktorbelägen.

Ein wesentlicher Vorteil des erfindungsgemäßen Katalysators ist die einfache Art der Katalysatorherstellung, die leicht und reproduzierbar auch in größerem Maßstab durchführbar ist. Ein weiterer Vorteil besteht darin, daß das gebildete Polymerprodukt nicht durch anorganische Fremdstoffe verunreinigt wird, welche die mechanische Stabilität des Materials herabsetzen. Sofern der spezielle polymere Träger in höherer Menge zugesetzt wird, lassen sich spezielle Polymerblends herstellen, die weitere vorteilhafte Eigenschaften besitzen.

Die nachfolgenden Beispiele sollen die Erfindung näher erläutern:

Alle Glasgeräte wurden im Vakuum ausgeheizt und mit Argon gespült. Alle Operationen wurden unter Ausschluß von Feuchtigkeit und Sauerstoff in Schlenk-Gefäßen durchgeführt. Die verwendeten Lösungsmittel wurden unter Argon jeweils frisch über Na/K-Legierung destilliert und in Schlenk-Gefäßen aufbewahrt.

Die Trägermaterialien wurden als Handelsprodukte der Bezeichnung ^{R}Accurel von der Fa. AKZO bezogen und durch Extraktion mit Toluol in einem Soxhlet-Extraktor unter Inertbedingungen von Verunreinigungen befreit, im Vakuum getrocknet und unter Argon aufbewahrt.

Mikroporöses HDPE wird als Granulat bezogen und zunächst in einer Mühle der Fa. Retsch nach Abkühlen mit flüssigem Stickstoff aufgemahlen. Verwendet wurde die Siebfraktion 100 - 400 µm.

Die mikroporösen ^{R}Accurel-Pulver von PP und Polyamid-6 werden als Siebfraktion bis 200 µm und von Polyamid-12 als Siebfraktion 200 - 400 µm verwendet. Der Hohlraumanteil beträgt für alle ^{R}Accurel-Materialien 75 Vol%. Die Porengröße beträgt 0,5 - 5µm (PP), 1,0 - 5 µm (HDPE), 0,5 - 3 µm (PA-6 und PA-12). Der MFI 21,6 (190 °C) des HDPE ist 4,5, der MFI 5 (230 °C) des PP ist 21.

Die angegebenen Polymerschmelzpunkte wurde einer DSC-Messung für das 2. Aufschmelzen (10 °/min) entnommen.

Die Aluminiumbestimmung des Aluminoxans erfolgt nach Hydrolyse mit Wasser und Schwefelsäure durch komplexometrische Titration nach Schwarzenbach.

Methylaluminoxan wird als 10%ige toluolische Lösung von der SCHERING AG bezogen und enthält gemäß Aluminiumbestimmung 36 mg Al/ml. Der mittlere Oligomerisationsgrad gemäß Gefrierpunktserniedrigung in Benzol beträgt p = 20.

### Beispiel 1:

Eine Lösung von 1 µmol Biscyclopentadienylzirkoniumdichlorid in 1 ml Toluol wird mit 10 ml einer 10 Gew% Lösung von Methylaluminoxan in Toluol vermischt und nach 15 minütiger Reaktionszeit im Vakuum auf ein Volumen von 2 ml eingeengt. Parallel hierzu werden 4 g ^{R}Accurel-PA-6 Pulver einer Siebfraktion kleiner 200 µm im Vakuum getrocknet und mit Argon gespült. Das Träger-Pulver wird in die Katalysator-Lösung eingerührt, bis eine homogene Verteilung erreicht ist.

### Polymerisation:

Ein trockener 1,5 dm³ Rührreaktor wird zur Entfernung des Sauerstoffs mit Stickstoff gespült und mit 0,9 dm³ eines inerten Dieselöls (Sdp. 100 - 120 °C) befüllt. Nach Spülen mit Ethylen wird auf 70 °C temperiert und der Katalysator als Pulver zudosiert. Anschließend wird ohne zusätzlichen Aktivator bei einem Druck von 7 bar Ethylen polymerisiert. Nach 1 h wird der Reaktor entspannt, das Polymer aus der Suspension abfiltriert und 12 h im Vakuum-Trockenschrank getrocknet. Es resultieren 18 g Polyethylen-Pulver mit einer Schüttdichte von 0,253 kg/dm³ und einer Viskositätszahl VZ: 389 cm³/g. Die Polydispersität (nach GPC) beträgt M_{W}/Mₙ = 2,6. Der Reaktor zeigt keine Beläge an Wänden oder Rührer.

### Beispiel 2:

Beispiel 1 wird wiederholt, mit dem Unterschied, daß 4 g ^{R}Accurel-PA-12 Pulver einer Siebfraktion 200 bis 400 µm als Träger eingesetzt werden. Nach der Polymerisation resultieren 25 g Polyethylen-Pulver mit einer Schüttdichte von 0,286 kg/dm³ und einer Viskositätszahl VZ: 370 cm³/g. Die Polydispersität (nach GPC) beträgt M_{W}/Mₙ = 2,5. Der Reaktor zeigt keine Beläge an Wänden und Rührer.

### Beispiel 3:

Beispiel 1 wird wiederholt, mit dem Unterschied, daß 4 g ^{R}Accurel-HDPE-Pulver als Träger eingesetzt werden. Nach der Polymerisation resultieren 14 g PE-Pulver mit einer Schüttdichte von 0,137 kg/dm³ und einer Viskositätszahl VZ: 390 cm³/g. Die Polydispersität (nach GPC) beträgt M_{W}/Mₙ = 2,7. Der Reaktor zeigt keine Beläge an Wänden oder Rührer.

### Beispiel 4

65 g ^{R}Accurel-PP-Pulver der Siebfraktion < 200 µm werden bei 2· 10⁻⁴ mbar getrocknet und mit Argon gespült. Parallel hierzu werden 11,7 mg Biscyclopentadienylzirkoniumdichlorid in 300 ml einer 10 Gew% Lösung von Methylaluminoxan in Toluol gelöst und 15 min gerührt. Die Lösung wird anschließend im Vakuum auf ein Volumen von 40 ml eingeengt und das getrocknete Pulver hinzugegeben. Durch kurzzeitiges Anlegen eines Vakuums wird das in den Poren des Trägers befindliche Gas entfernt und die Lösung vollständig aufgesogen. Nach weiteren 10 min. intensiven Rührens erhält man ein homogenes, feinteiliges und gut fließendes Pulver. Ein inertisierter 180 dm³-Reaktor wird mit 80 1 Dieselöl (Sdp. 100 - 120 °C) befüllt, auf 50 °C erwärmt und 3 bar Ethylen eingeleitet. Der Katalysator wird in 100 ml n-Decan suspendiert und über eine Schleuse zudosiert. Gleichzeitig wird der Ethylendruck auf 7 bar erhöht und die Temperatur durch Kühlung auf 70 °C konstant gehalten. Nach 2 h Polymerisationszeit wird der Reaktor entspannt und die Suspension in einer Drucknutsche abfiltriert. Nach dem Trocknen im Vakuum-Trockenschrank resultieren 5,4 kg Polyethylen entsprechend einer reduzierten Kontakt-Zeit-Ausbeute von 9,6 [kg/(mmol·h·bar)] und von einem Schüttgewicht 164 g/dm³. Das Produkt besitzt eine Dichte von 0,9438 g/cm³ bei einer Viskositätszahl VZ von 454 cm³/g und einer Polydispersität (nach GPC) von . M_{W}/Mₙ = 2,7 Der Reaktor zeigt keine Beläge an Wand und Rührer.

### Beispiel 5:

In einem Schlenkkolben werden unter Ar 5,1 mg rac-Dimethylsilyl-bis-1-(2-methylindenyl)zirkoniumdichlorid in 40 cm³ toluolischer Methylaluminoxan-Lösung gelöst und durch 15 minütiges Stehenlassen mit dem Methylaluminoxan umgesetzt. Die entstehende Lösung wird im Vakuum auf 8 ml eingeengt. Zu dieser Lösung gibt man unter Ar 8 g getrocknetes ^{R}Accurel-PP-Pulver (< 200 µm) und sorgt durch Schütteln der Probe für eine gleichmäßige Verteilung in dem Pulver; zum Ende erhält man ein frei fließendes Pulver. Parallel hierzu wird ein trockener 16 dm³-Reaktor mit Stickstoff gespült, mit 10 dm³ flüssigem Propen befüllt und auf 30 °C temperiert. Anschließend wird der Katalysator pulverförmig über ein Schleusensystem in den Reaktor geblasen, das Polymerisationssystem durch Wärmezufuhr auf die Polymerisationstemperatur 70 °C aufgeheizt (10 °C/min) und 1 h durch Kühlung bei dieser Temperatur gehalten. Die Polymerisation wird dann durch Zugabe von 5 ml Isopropanol gestoppt und der Reaktor entspannt und geöffnet. Nach Vakuumtrocknung des Produkts werden 0,4 kg Polypropylen mit einer Viskositätszahl VZ von 145 cm³/g erhalten. Der mittlere Korndurchmesser d₅₀ beträgt gemäß Siebanalyse 650 µm, mit einem Feinkornanteil ( < 100 µm) von 1 Gew-%. Der Reaktor zeigt keine Beläge an Wand und Rührer.

### Vergleichsbeispiel 1:

Zur Herstellung des Katalysators werden 5,2 mg rac-Dimethylsilyl-bis-1-(2-methylindenyl)zirkoniumdichlorid in 20 cm³ toluolischer Methylaluminoxan-Lösung gelöst und durch 15 minütiges Stehenlassen mit dem Methylaluminoxan umgesetzt. Parallel hierzu wird ein trockener 16 dm³-Reaktor mit Stickstoff gespült und mit 10 dm³ flüssigem Propen befüllt. In diesen Reaktor werden 30 cm³ toluolischer Methylaluminoxan-Lösung gegeben und bei 30 °C 15 min. gerührt. Anschließend wird der dann fertige Katalysator in den Reaktor gegeben und wie im Beispiel 5 polymerisiert. Nach Öffnen des Reaktors zeigt sich ein vollständiger Belag von 3 mm Dicke an Wand und Rührer. Nach Vakuumtrocknung des Produkts werden 1,3 kg Polypropylen mit einer Viskositätszahl VZ von 151 cm³/g und einem Schmelzpunkt (DSC) von 145 °C erhalten. Der mittlere Korndurchmesser d₅₀ beträgt gemäß Siebanalyse 350 µm.

### Beispiel 6:

In einen Schlenkkolben werden unter Argon 5,5 mg Isopropyliden(9-fluorenyl)(cyclopentadienyl)-zirkondichlorid in 40 cm³ toluolischer Methylaluminiumoxanlösung gelöst und durch 15 minütiges Stehenlassen mit dem Methylaluminium umgesetzt. Die entstehende Lösung wird im Vakuum auf 10 ml eingeengt. Zu dieser Lösung gibt man unter Argon 10 g ^{R}Accurel-PA-6 Pulver einer Siebfraktion kleiner 200 µm und sorft durch Schütteln der Probe für eine gleichmäßige Verteilung in dem Pulver. Es wird ein frei fließendes Pulver erhalten.

Parallel dazu wird ein trockener 16 dm³-Reaktor mit Ethylen gespült und mit 6 dm³ einer 85 %igen Norbornenlösung in Toluol beschickt. Bei 70 °C wird ein Ethylenpartialdruck von 6 bar im Reaktor eingestellt und der Katalysator pulverförmig über ein Schleusensystem in den Reaktor geblasen. Während der dann folgenden einstündigen Polymerisation wird der Ethylenpartialdruck durch Nachdosierung konstant bei 6 bar gehalten. Dann wird der Reaktor abgegast, mit 100 cm³ Wasser 30 Minuten gerührt und der Reaktorinhalt filtriert. Die klare Lösung wird langsam zu 50 dm³ Aceton gegeben, 15 Minuten gerührt und das ausgefallene Polymer wird abfiltriert sowie mit Aceton gewaschen. Nach Trocknung bei 80 °C im Vakuum werden 375 g Ethylen-Norbornen-Copolymer erhalten, das eine Viskositätszahl VZ von 219 cm³/g und eine Glasübergangstemperatur von 152 °C aufweist.

## Patentansprüche

1. Geträgerter Polymerisationskatalysator, herstellbar durch Umsetzung des Reaktionsprodukts gebildet aus einem Aluminoxan und mindestens einem Metallocen mit einem mikroporösen, polymeren Träger, wobei das Porenvolumen des mikroporösen, polymeren Trägers mindestens 50 Vol.-% bezogen auf das Gesamtvolumen des Trägermaterials beträgt.

2. Katalysator gemäß Anspruch 1, wobei daß als mikroporöser, polymerer Träger ein Thermoplast verwendet wird.

3. Katalysator gemäß Anspruch 1 oder 2, wobei als polymerer Träger Polyethylen, Polypropylen, Polystyrol, Polyvinylchlorid, Acrylnitril-Butadien-Styrol-Copolymer, Polyamid, Polymethylmethacrylat oder Polycarbonat verwendet wird.

4. Katalysator gemäß einem oder mehreren der Ansprüche 1 bis 3, wobei als Aluminoxan eine Verbindung der Formel (II) 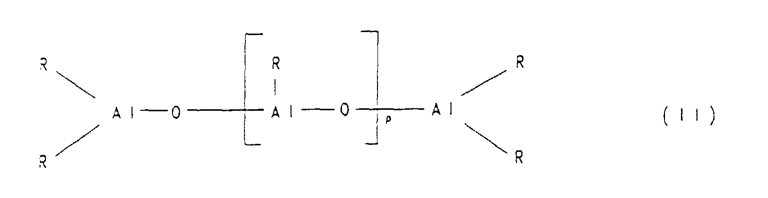 für den linearen Typ und/oder der Formel (III) 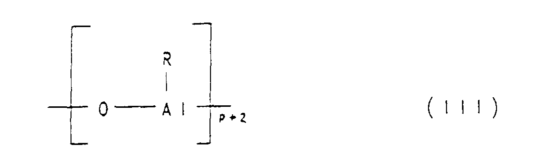 für den cyclischen Typ verwendet wird, wobei in den Formeln (II) und (III) die Reste R gleich oder verschieden sein können und eine C₁-C₆-Alkylgruppe, eine C₆-C₁₈-Arylgruppe, Benzyl oder Wasserstoff bedeuten, und p eine ganze Zahl von 2 bis 50 bedeutet.

5. Katalysator gemäß einem oder mehreren der Ansprüche 1 bis 4, wobei bei seiner Herstellung ein Metallocen verwendet wird.

6. Katalysator gemäß einem oder mehreren der Ansprüche 1 bis 5, wobei als Metallocen ein Zirkonocen verwendet wird.

7. Verfahren zur Herstellung eines Katalysators gemäß einem oder mehreren der Ansprüche 1 bis 6, wobei man das Reaktionsprodukt gebildet aus einem Aluminoxan und mindestens einem Metallocen mit einem mikroporösen, polymeren Träger umsetzt.

8. Verfahren zur Herstellung eines Olefinpolymers durch Polymerisation oder Copolymerisation eines Olefins der Formel R^{a}-CH = CH-R^{b}, worin R^{a} und R^{b} gleich oder verschieden sind und ein Wasserstoffatom oder einen Kohlenwasserstoffrest mit 1 bis 14 C-Atomen bedeuten, oder R^{a} und R^{b} mit den sie verbindenden Atomen einen Ring bilden können, bei einer Temperatur von -60 bis 200 °C, bei einem Druck von 0,5 bis 100 bar, in Lösung, in Suspension oder in der Gasphase, in Gegenwart eines Katalysators, dadurch gekennzeichnet, daß ein Katalysator gemäß einem oder mehreren der Ansprüche 1 bis 6 verwendet wird.

9. Verfahren gemäß Anspruch 8, dadurch gekennzeichnet, daß Propylen oder Ethylen polymerisiert oder copolymerisiert wird.

## Claims

1. A supported polymerization catalyst, which can be prepared by reacting a reaction product formed from an aluminoxane and at least one metallocene with a microporous, polymeric support, where the pore volume of the microporous, polymeric support is at least 50 % by volume, based on the total volume of the support material.

2. A catalyst as claimed in claim 1, where the microporous, polymeric support used is a thermoplastic.

3. A catalyst as claimed in claim 1 or 2, where the polymeric support used is polyethylene, polypropylene, polystyrene, polyvinyl chloride, acrylonitrile-butadiene-styrene copolymer, polyamide, polymethylmethacrylate or polycarbonate.

4. A catalyst as claimed in one or more of claims 1 to 3, where the aluminoxane used is a compound of the formula (II) 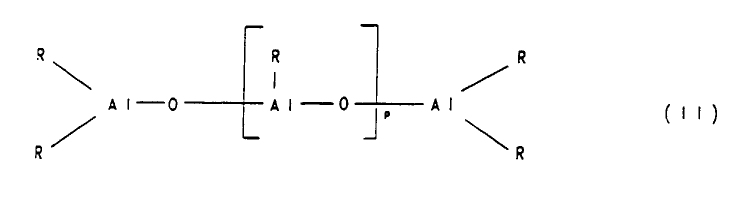 for the linear type and/or of the formula (III) 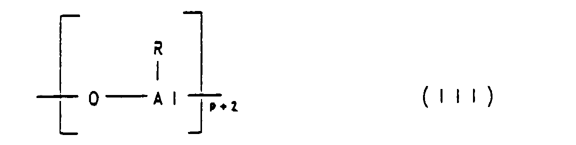 for the cyclic type, where, in the formulae (II) and (III), the radicals R may be identical or different and are a C₁-C₆-alkyl group, a C₆-C₁₈-aryl group, benzyl or hydrogen, and p is an integer from 2 to 50.

5. A catalyst as claimed in one or more of claims 1 to 4, where a metallocene is used in its preparation.

6. A catalyst as claimed in one or more of claims 1 to 5, where the metallocene used is a zirconocene.

7. A process for the preparation of a catalyst as claimed in one or more of claims 1 to 6, where the reaction product formed from an aluminoxane and at least one metallocene is reacted with a microporous, polymeric support.

8. A process for the preparation of an olefin polymer by polymerization or copolymerization of an olefin of the formula R^{a}-CH=CH-R^{b}, in which R^{a} and R^{b} are identical or different and are a hydrogen atom or a hydrocarbon radical having 1 to 14 carbon atoms, or R^{a} and R^{b}, together with the atoms connecting them, can form a ring, at a temperature of from -60 to 200°C, at a pressure of from 0.5 to 100 bar, in solution, in suspension or in the gas phase, in the presence of a catalyst, wherein a catalyst as claimed in one or more of claims 1 to 6 is used.

9. The process as claimed in claim 8, wherein propylene or ethylene is polymerized or copolymerized.

## Revendications

1. Catalyseur de polymérisation sur support, que l'on peut préparer par la réaction du produit de la réaction formé d'un aluminoxane et d'au moins un métallocène avec un support polymérique, microporeux, où le volume des pores du support polymérique, microporeux atteint au moins 50% en volume par rapport au volume total du matériau de support.

2. Catalyseur suivant la revendication 1, où on utilise une matière thermoplastique à titre de support polymérique microporeux.

3. Catalyseur suivant la revendication 1 ou 2, où on utilise, à titre de support polymérique, du polyéthylène, du polypropylène, du polystyrène, du poly(chlorure de vinyle), un copolymère d'acrylonitrile-butadiène-styrène, du polyamide, du poly(méthacrylate de méthyle) ou du polycarbonate.

4. Catalyseur suivant une ou plusieurs des revendications 1 à 3, où on utilise, à titre d'aluminoxane, un composé de la formule (II) : 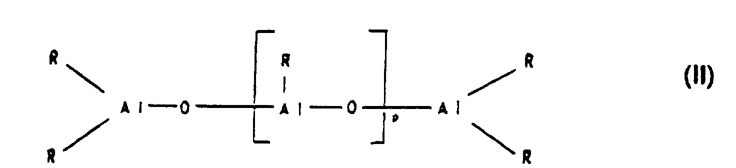 pour le type linéaire et/ou de la formule (III) : 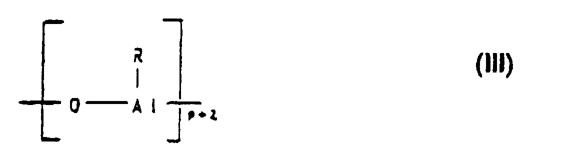 pour le type cyclique, où dans les formules (Il) et (III), les symboles R peuvent être identiques ou différents et représentent chacun un groupe alkyle en C₁ à C₆, un groupe aryle en C₆ à C₁₈, un groupe benzyle ou un atome d'hydrogène, et p est un nombre entier dont la valeur varie de 2 à 50.

5. Catalyseur suivant une ou plusieurs des revendications 1 à 4, où on utilise un métallocène au cours de sa préparation.

6. Catalyseur suivant une ou plusieurs des revendications 1 à 5, où on utilise un zirconocène à titre de métallocène.

7. Procédé de préparation d'un catalyseur suivant une ou plusieurs des revendications 1 à 6, où on fait réagir le produit de la réaction forrmé d'un aluminoxane et d'au moins un métallocène avec un support polymérique poreux.

8. Procédé de préparation d'un polymère d'oléfine par la polymérisation ou la copolymérisation d'une oléfine de la formule R^{a}-CH=CH-R^{b}, dans laquelle R^{a} et R^{b} sont identiques ou différents et représentent chacun un atome d'hydrogène ou un reste d'hydrocarbure comportant de 1 à 14 atomes de carbone, ou bien R^{a} et R^{b} peuvent former un cycle avec les atomes qui les relient, à une température de -60 à 200°C, sous une pression de 0,5 à 100 bars, en solution, en suspension ou en phase gazeuse, en présence d'un catalyseur, caractérisé en ce que l'on utilise un catalyseur suivant une ou plusieurs des revendications 1 à 6.

9. Procédé suivant la revendication 8, caractérisé en ce que l'on polymérise ou copolymérise le propylène ou l'éthylène.
